# FASCICULE DE BREVET EUROPEEN

(11) **EP 0 790 547 B1**
(45) Date de publication et mention de la délivrance du brevet: **04.08.2004**
(21) Numéro de dépôt: 97400365.9
(22) Date de dépôt: 19.02.1997
(51) Int. Cl.: G06F 1/04, G06F 1/00

(54) **Procédé de séquencement d'un circuit intégré**
Prozess zum Takten einer integrierten Schaltung
Integrated circuit clocking process

(30) Priorité: 19.02.1996 FR 9602030
(43) Date de publication de la demande: 20.08.1997
(73) Titulaire: STMicroelectronics S.A., 92120 Montrouge (FR)
(72) Inventeur: Wuidart, Sylvie, 94230 Cachan (FR)
(74) Mandataire: Ballot, Paul

(56) Documents cités:
- FR-A- 2 596 897
- US-A- 5 404 402

## Description

La présente invention concerne un procédé de séquencement d'un circuit intégré.

L'invention s'applique particulièrement aux circuits intégrés destinés aux cartes à puces.

Les circuits intégrés destinés aux applications du type cartes à puce comportent habituellement une entrée destinée à recevoir un signal d'horloge externe. Ce signal d'horloge est utilisé pour générer un signal d'horloge interne apte à assurer le fonctionnement du circuit intégré, comme par example décrit dans le document FR-A-2596897.

Le fonctionnement interne du circuit intégré est ainsi séquencé par rapport au signal d'horloge externe.

Pour des applications de type carte à puce, ou pour toute autre application nécessitant une grande sécurité de fonctionnement, il est impératif de pouvoir empêcher qu'un parasitage du signal d'horloge externe puisse perturber le signal d'horloge interne et modifier le fonctionnement du circuit intégré. Ce serait en effet un moyen de réaliser des fraudes.

On a ainsi l'habitude d'utiliser dans le générateur du signal d'horloge interne, un circuit de filtrage apte à s'affranchir de telles perturbations sur le signal d'horloge externe. Un exemple d'un tel générateur est décrit dans le brevet FR 2 708 809. On connaît aussi des structures qui permettent d'obtenir un signal d'horloge interne dont les caractéristiques sont peu dépendantes des variations de température ou des variations liées au procédé de fabrication. Une structure de ce type est par exemple décrite dans le brevet FR 2 707 058.

Cependant, on a découvert dans la présente invention, que de telles structures, si elles permettent d'empêcher de perturber le fonctionnement interne d'un circuit intégré, elles ne permettent cependant pas d'empêcher un autre type de fraude, à savoir l'observation du comportement du circuit intégré. En effet, comme le signal d'horloge interne est basé sur le signal d'horloge externe, ce signal d'horloge externe peut servir de signal de synchronisation. Ceci peut permettre à une personne mal intentionnée d'obtenir notamment des données confidentielles ou même des informations qui lui permettront de reconstituer le programme exécuté par le circuit intégré.

Aussi, le problème technique à résoudre dans la présente invention, est de proposer un moyen pour empêcher que le signal d'horloge externe puisse aussi servir de signal de synchronisation interne, de manière à protéger le circuit intégré contre des fraudes correspondantes.

Une solution à ce problème technique est apportée par la présente invention en utilisant en outre un signal d'horloge aléatoire généré en interne, pour utiliser le signal d'horloge externe ou le signal d'horloge aléatoire selon l'instruction à exécuter par le circuit intégré.

De préférence, on utilisera le signal d'horloge aléatoire au moins pour des opérations traitant des données confidentielles.

On peut même prévoir d'utiliser le signal d'horloge aléatoire par défaut, et ne commuter le signal d'horloge externe que pour les opérations nécessitant une synchronisation externe.

L'horloge interne étant totalement indépendante de l'horloge externe, le circuit peut continuer à fonctionner même si aucune horloge externe n'est appliquée. Notamment, tous les contrôles sécuritaires effectués par le logiciel du circuit continuent à être actifs.

De cette manière, le fonctionnement interne du circuit intégré n'est plus synchrone du signal d'horloge externe, excepté pour ces opérations qui doivent être synchronisées.

D'autres caractéristiques et avantages de l'invention sont détaillés dans la description qui suit, donnée à titre indicatif et non limitatif de l'invention et en référence aux dessins annexés, dans lesquels :
- la figure 1 représente un schéma bloc d'un circuit intégré selon l'invention.
- la figure 2 représente un chronogramme des signaux d'horloge correspondants.

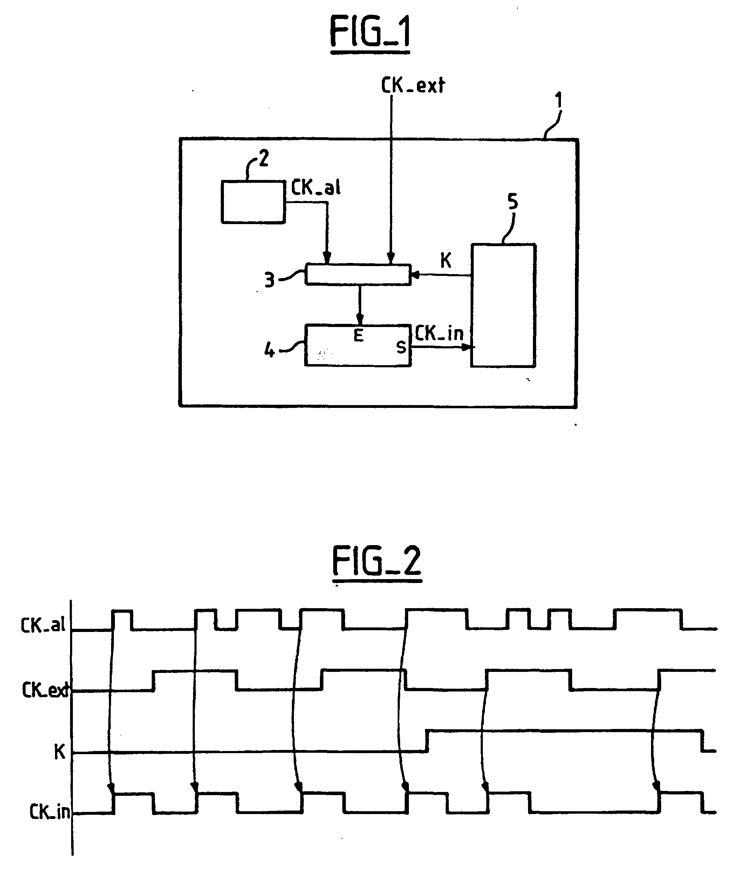

La figure 1 représente un schéma bloc d'un circuit intégré 1 permettant la mise en oeuvre de l'invention.

Le circuit intégré 1 comprend une entrée pour recevoir un signal d'horloge externe CK-ext. Selon l'invention, il comprend en outre un générateur aléatoire 2 pour fournir un signal d'horloge aléatoire CK-al.

Les deux signaux d'horloge CK-ext et CK-al sont appliqués sur deux entrées d'un circuit de commutation 3.

Ce circuit 3 est apte à commuter l'un ou l'autre signal d'horloge sur une entrée E d'un circuit de génération d'un signal d'horloge interne CK-in, selon le niveau O ou 1 d'une commande binaire K.

Ce signal d'horloge interne CK-in est appliquée à la circuiterie du circuit intégré.

Cette circuiterie référencée en 5 n'est pas détaillée sur la figure, mais elle comprend typiquement des circuits mémoires dans lesquels sont notamment mémorisés le programme d'application et des données confidentielles (code d'identification par exemple) et des moyens pour gérer les échanges externes et ces circuits mémoires (processeur, microcontrôleur ou autres).

Le circuit de commutation 3 selon l'invention reçoit la commande binaire de commutation K de cette circuiterie 5. Selon son état logique bas ou haut, cette commande permet de commuter soit le signal d'horloge aléatoire soit le signal d'horloge externe sur l'entrée E du circuit de génération d'horloge 4.

Ce circuit de génération 4 permet de délivrer en sortie un signal d'horloge dont les impulsions sont stabilisées en durée. Typiquement et comme représenté sur la figure 2, la détection d'un front montant sur l'entrée E fait passer le signal de sortie de l'état bas à l'état haut, pendant une durée calibrée d1, puis le signal de sortie repasse à l'état bas pendant au moins une durée déterminée d2. Ce n'est qu'à l'expiration de cette durée d2 que le circuit de génération peut prendre en compte une nouvelle impulsion sur son entrée E. Un circuit de génération tel que décrit dans le brevet FR 2 708 809 précité peut par exemple convenir.

Un circuit intégré comprend ainsi selon l'invention un générateur aléatoire apte à fournir un signal d'horloge aléatoire et un circuit de commutation apte à commuter l'une ou l'autre horloge externe ou aléatoire comme signal impulsionnel d'entrée du générateur 4 du signal d'horloge interne.

Un tel circuit permet ainsi d'imposer le signal d'horloge aléatoire comme signal impulsionnel d'entrée au moins pour des opérations traitant de données confidentielles (contenues dans les circuits mémoires de la circuiterie 5). Il permet d'utiliser le signal d'horloge externe pour les opérations nécessitant une synchronisation externe.

De cette manière, les données confidentielles contenues dans le circuit intégré sont protégées des fraudes, puisqu'il n'est plus possible de trouver une synchronisation externe pour espionner les opérations du circuit intégré.

Dans une variante, un tel circuit permet avantageusement d'imposer par défaut le signal d'horloge aléatoire comme signal impulsionnel d'entrée et de n'utiliser le signal d'horloge externe comme signal impulsionnel d'entrée que pour des opérations du circuit intégré nécessitant une synchronisation externe.

Avec un tel procédé de séquencement interne, il devient alors impossible de trouver une synchronisation externe. Les seules opérations du circuit intégré qui seront synchronisées avec le signal d'horloge externe seront celles concernant les transmissions de données avec un système externe, par exemple, les transmissions par liaison série.

En pratique, quand le circuit intégré exécute le programme et qu'il arrive sur des instructions correspondants à une transmission (émission ou réception) avec un système externe, il active la commande K(K=1) pour commuter temporairement le signal d'horloge externe.

Dès que la transmission est terminée, il désactive la commande K(K=0) pour commuter à nouveau le signal d'horloge aléatoire.

Un tel procédé de séquencement est illustré à la figure 2 : tant que la commande K est à zéro, le signal d'horloge interne CK-in est basé sur le signal d'horloge aléatoire. Dès que la commande K passe à un, le signal d'horloge interne CK-in est basé sur le signal d'horloge externe.

Outre que le procédé de séquencement interne selon cette variante est particulièrement simple à mettre en oeuvre, elle permet au circuit intégré de toujours fonctionner à sa vitesse la plus rapide : quand le séquencement est basé sur le signal d'horloge aléatoire, on peut travailler à la vitesse optimum du circuit intégré (par exemple 40 MHZ) ; quand il est basé sur l'horloge externe, la vitesse du circuit intégré est alors adaptée aux conditions extérieures (vitesse plus lente, par exemple de l'ordre de 10 MHZ).

## Revendications

1. Procédé de séquencement interne d'un circuit intégré (1) à partir d'un circuit de filtrage d'un signal impulsionnel, le circuit intégré (1) recevant un signal d'horloge externe (CK_ext) **caractérisé en ce qu'**il consiste à utiliser en outre un signal d'horloge aléatoire (CK_al), généré en interne (2) du circuit intégré, pour imposer le signal d'horloge externe (CK_ext), ou le signal d'horloge aléatoire (CK_al) comme signal impulsionnel (CK_in), selon l'opération à exécuter par le circuit intégré.

2. Procédé de séquencement interne d'un circuit intégré selon la revendication 1, **caractérisé en ce qu'**il consiste à imposer le signal d'horloge aléatoire au moins pour des opérations traitant des données confidentielles et le signal d'horloge externe au moins pour des opérations du circuit intégré nécessitant une synchronisation externe.

3. Procédé de séquencement interne d'un circuit intégré selon la revendication 1 ou 2, **caractérisé en ce qu'**il consiste à imposer par défaut le signal d'horloge aléatoire comme signal impulsionnel et à n'utiliser le signal d'horloge externe que pour des opérations du circuit intégré nécessitant une synchronisation externe.

4. Circuit intégré comprenant une entrée pour recevoir un signal d'horloge externe et un circuit de génération d'un signal d'horloge interne, **caractérisé en ce qu'**il comprend en outre un générateur d'un signal d'horloge aléatoire et un circuit apte à commuter le signal d'horloge externe ou le signal d'horloge aléatoire en entrée dudit circuit de génération selon l'instruction à exécuter par le circuit intégré.

5. Circuit intégré selon la revendication 4, **caractérisé en ce qu'**il envoie une commande de commutation du signal d'horloge aléatoire au moins pour des opérations traitant de données confidentielles et une commande de commutation du signal d'horloge externe au moins pour des opérations nécessitant une synchronisation externe.

6. Circuit intégré selon la revendication 4 ou 5, **caractérisé en ce qu'**il envoie par défaut une commande de commutation du signal d'horloge aléatoire qu'il n'envoie une commande de commutation du signal d'horloge externe que pour des opérations nécessitant une synchronisation externe.

## Claims

1. Integrated circuit (1) internal clocking process using a pulse signal filter circuit, the integrated circuit (1) receiving an external clock signal (CK_ext), **characterized in that** it additionally consists in using a random clock signal (CK_al), generated internally (2) to the integrated circuit, so as to impose either the external clock signal (CK_ext) or the random clock signal (CK_al) as pulse signal (CK_in), depending on the operation to be performed by the integrated circuit.

2. Integrated circuit internal clocking process according to Claim 1, **characterized in that** it consists in imposing the random clock signal at least for confidential data processing operations and the external clock signal at least for integrated circuit operations requiring an external synchronization.

3. Integrated circuit internal clocking process according to either of Claims 1 and 2, **characterized in that** it consists in imposing the random clock signal as default pulse signal and in only using the external clock signal for integrated circuit operations requiring an external synchronization.

4. Integrated circuit comprising an input for receiving an external clock signal and an internal clock signal generator circuit, **characterized in that** it additionally comprises a random clock signal generator and a circuit that is able to switch either the external clock signal or the random clock signal onto the input of the said generator circuit according to the instruction to be executed by the integrated circuit.

5. Integrated circuit according to Claim 4, **characterized in that** it sends a instruction for switching to the random clock signal at least for confidential data processing operations and an instruction for switching to the external clock signal at least for operations requiring an external synchronization.

6. Integrated circuit according to either of Claims 4 and 5, **characterized in that** it sends a default instruction for switching to the random clock signal and **in that** it only sends an instruction for switching to the external clock signal for operations requiring an external synchronization.

## Patentansprüche

1. Verfahren zur internen Taktung einer integrierten Schaltung (1) mittels eines Filterkreises eines Impulssignals, welche integrierte Schaltung (1) ein externes Taktsignal (ck_ext) empfängt, **dadurch gekennzeichnet, dass** es darin besteht, außerdem ein intern von der integrierten Schaltung erzeugtes, zufälliges Taktsingal (ck_al) zu verwenden, um das externe Taktsignal (ck_ext) oder das zufällige Taktsignal (ck_al) als Impulssignal (ck_in) entsprechend der von der integrierten Schaltung auszuführenden Funktion zuzuweisen.

2. Verfahren zur internen Taktung einer integrierten Schaltung nach Anspruch 1, **dadurch gekennzeichnet, dass** es darin besteht, das zufällige Taktsignal wenigstens Funktionen zum Verarbeiten von vertraulichen Daten und das externe Taktsignal wenigstens Funktionen der integrierten Schaltung, die eine externe Synchronisation erfordern, zuzuweisen.

3. Verfahren zur internen Taktung einer integrierten Schaltung nach Anspruch 1 oder 2, **dadurch gekennzeichnet, dass** es darin besteht, das zufällige Taktsignal voreingestellt als Impulssignal zuzuweisen und das externe Taktsignal nur für Funktionen der integrierten Schaltung, die eine externe Synchronisation erfordern, zu verwenden.

4. Integrierte Schaltung mit einem Eingang zum Empfangen eines externen Taktsignals und einem Schaltkreis zur Erzeugung eines internen Taktsignals, **dadurch gekennzeichnet, dass** sie außerdem einen Generator für ein zufälliges Taktsignal und einen Schaltkreis, der geeignet ist, das externe Taktsignal oder das zufällige Taktsignal am Eingang des Erzeugungskreises entsprechend dem von der integrierten Schaltung auszuführenden Befehl zu kommutieren, umfasst.

5. Integrierte Schaltung nach Anspruch 4, **dadurch gekennzeichnet, dass** sie einen Befehl zur Kommutation des zufälligen Taktsignals wenigstens für Funktionen zur Verarbeitung von vertraulichen Daten und einen Befehl zur Kommutation des externen Taktsignals wenigstens für eine externe Synchronisation erfordernde Funktionen sendet.

6. Integrierte Schaltung nach Anspruch 4 oder 5, **dadurch gekennzeichnet, dass** sie voreingestellt einen Befehl zur Kommutation des zufälligen Taktsignals sendet, während sie einen Befehl zur Kommutation des externen Taktsignals nur für eine externe Synchronisation erfordernde Funktionen sendet.
